# FASCICULE DE BREVET EUROPEEN

(11) **EP 4 101 346 B1**
(45) Date de publication et mention de la délivrance du brevet: **03.07.2024**
(21) Numéro de dépôt: 22175225.6
(22) Date de dépôt: 24.05.2022
(51) Int. Cl.: A47F 11/10, A47F 3/04, A47F 3/00, F21V 8/00

(54) **DISPOSITIF DE PRESENTATION D'OBJET ET ENSEMBLE COMPRENANT UN TEL DISPOSITIF**
VORRICHTUNG ZUM PRÄSENTIEREN EINES GEGENSTANDS UND ANORDNUNG MIT EINER SOLCHEN VORRICHTUNG
DEVICE FOR PRESENTATION OF AN OBJECT AND ASSEMBLY COMPRISING SUCH A DEVICE

(30) Priorité: 07.06.2021 FR 2105963
(43) Date de publication de la demande: 14.12.2022
(73) Titulaire: O.C.F. - OUEST CONSTRUCTIONS FRIGORIFIQUES, 85110 Sigournais (FR)
(72) Inventeur: ZANLORENZI, Guillaume, 85270 SAINT HILAIRE DE RIEZ (FR)
(74) Mandataire: Ipsilon

(56) Documents cités:
- EP-A1- 1 767 850
- WO-A1-2011/086369
- FR-A- 1 015 067
- FR-A1- 2 712 785

## Description

La présente invention concerne un dispositif de présentation d'objet, et plus particulièrement un dispositif de présentation d'un objet de consommation, tel qu'un article de pâtisserie ainsi qu'un ensemble comprenant un tel dispositif de présentation d'objet et un objet à présenter.

Elle concerne en particulier un dispositif de présentation d'objet, comprenant une enceinte réfrigérée ouvrable, délimitant intérieurement une surface d'exposition de l'objet à présenter, et au moins un organe d'émission d'un faisceau lumineux, disposé en regard de la surface d'exposition de l'objet à présenter, pour une orientation du faisceau lumineux en direction de l'objet à présenter, ladite enceinte présentant au moins une paroi latérale transparente.

Les objets alimentaires consommables, tels que les articles de pâtisserie, sont en général exposés en vitrine ou sur présentoir vitré, en plateau ou en rangs regroupant une série d'articles de même nature. Ces plateaux ou rangs sont disposés à côté de plateaux ou rangs d'articles de pâtisserie de nature voisine. L'impression ressentie par un acheteur éventuel est en général une impression d'abondance, de qualité, mais rarement d'excellence ou d'exclusivité. On est donc à la recherche de solutions permettant d'isoler une zone d'exposition dans un grand volume.

EP-1.767.850 décrit un dispositif de présentation d'objet comprenant une enceinte réfrigérée ouvrable avec une paroi transparente délimitant intérieurement une surface d'exposition de l'objet à présenter et au moins un organe d'émission d'un faisceau lumineux.

Le document FR-2.712.785 décrit un dispositif de présentation de bijoux.

Le document WO 2011/086369 décrit une vitrine d'exposition pour mettre en valeur la présentation de tout genre d'objets.

Le document WO 2011/086369 décrit un procédé et une installation pour éclairer un objet dans une vitrine à l'aide d'un ordinateur.

Un but de la présente invention est de proposer un dispositif de présentation d'un objet à présenter sous une forme individuelle dont la conception permet de faire ressortir les qualités exceptionnelles dudit objet.

A cet effet, l'invention a pour objet un dispositif de présentation d'objet, comprenant une enceinte réfrigérée ouvrable, délimitant intérieurement une surface d'exposition de l'objet à présenter, et au moins un organe d'émission d'un faisceau lumineux, disposé en regard de la surface d'exposition de l'objet à présenter, pour une orientation du faisceau lumineux en direction de l'objet à présenter, ladite enceinte réfrigérée présentant au moins une paroi latérale transparente, caractérisé en ce que la surface d'exposition a un revêtement noir anti-reflet, le dispositif de présentation d'objet comprend au moins un guide de lumière, l'organe d'émission d'un faisceau lumineux est couplable audit au moins un guide de lumière, et, à l'état couplé à l'organe d'émission d'un faisceau lumineux, le guide de lumière est réglable en écartement par rapport à la surface d'exposition de l'objet à présenter. Le traitement de la surface d'exposition associé à une possibilité de réglage du guide de lumière permettent d'éviter une dispersion du regard de l'observateur et contraignent le regard de l'observateur à se concentrer sur l'objet à présenter.

Selon l'invention, le revêtement noir anti-reflet de la surface d'exposition de l'objet à présenter comprend une peinture noire mate et des fibres noires. Les fibres noires sont aptes à l'absorption et à la diminution de la diffusion de la lumière. Ces fibres noires forment l'élément anti-reflet dudit revêtement noir.

Selon un mode de réalisation, les fibres noires sont collées à la peinture noire mate pour conférer audit revêtement noir anti-reflet une finition floquée. Le dépôt de fibres noires à la surface de la peinture noire mate adhésive à la manière d'un flocage permet l'obtention d'un effet anti-reflet et peut conférer au revêtement un aspect fini de type velours.

Selon un mode de réalisation, les fibres noires présentent une longueur inférieure à 1,5 mm.

Selon un mode de réalisation, la peinture noire mate est une peinture acrylique et les fibres noires sont en matière de synthèse de préférence en polyamide. En particulier, la peinture noire d'aspect mat est une peinture à base de styrène acrylique. La peinture et les fibres sont adaptées à un contact alimentaire.

Selon un mode de réalisation, le revêtement noir anti-reflet de la surface d'exposition de l'objet à présenter est un revêtement lavable à l'eau. Il en résulte un entretien aisé.

Selon un mode de réalisation, l'enceinte est une enceinte polyédrique, de préférence parallélépipédique, comprenant une face formant fond, une face du dessus opposée à la face formant fond et des faces latérales, la surface d'exposition de l'objet à présenter de l'enceinte est formée par la face formant fond de l'enceinte, la ou au moins l'une des parois latérales transparentes de l'enceinte est formée par l'une des faces latérales de l'enceinte et au moins chaque face latérale qui ne forme pas une paroi latérale transparente de l'enceinte et la face du dessus de l'enceinte ont, comme la surface d'exposition de l'objet à présenter, un revêtement noir anti-reflet. Ainsi, seuls les rayons lumineux de l'éclairage qui frappent l'objet à présenter sont renvoyés vers les yeux d'un observateur placé devant la ou l'une des parois latérales transparentes de l'enceinte tandis que les autres rayons lumineux sont absorbés pour ne pas troubler le regard.

Selon un mode de réalisation, l'enceinte est une enceinte réfrigérée.

Selon un mode de réalisation, le guide de lumière a la forme d'un cylindre portant un taraudage intérieur pour un vissage assurant d'une part son couplage à l'organe d'émission d'un faisceau lumineux, et d'autre part son réglage en écartement par rapport à la surface d'exposition de l'objet à présenter. Bien que la paroi transversale puisse être fixe, l'amovibilité de la paroi transversale permet de passer aisément d'une forme d'ouverture à une autre. En variante, il peut être prévu un jeu de guides de lumière avec chaque guide de lumière présentant une paroi transversale avec une ouverture centrale de forme et/ou de dimension distinctes des ouvertures centrales des autres guides de lumière.

Selon un mode de réalisation, le guide de lumière qui a la forme d'un cylindre raccordable par l'une de ses extrémités à l'organe d'émission d'un faisceau lumineux porte à son extrémité opposée une paroi transversale de préférence amovible présentant une ouverture centrale.

L'invention a encore pour objet un ensemble comprenant un dispositif de présentation d'objet et un objet à présenter de forme et de dimensions connues, caractérisé en ce que le dispositif de présentation d'objet est du type précité, le guide de lumière qui a la forme d'un cylindre raccordable par l'une de ses extrémités à l'organe d'émission d'un faisceau lumineux porte à son extrémité opposée une paroi transversale de préférence amovible présentant une ouverture centrale et l'ouverture centrale de la paroi transversale est de forme homothétique à la forme de l'objet à présenter. Il est ainsi possible par le réglage du positionnement relatif du guide de lumière et de l'organe d'émission d'un faisceau lumineux d'adapter la zone d'éclairage au plus près de l'objet.

### Brève description des dessins

L'invention sera bien comprise à la lecture de la description suivante d'exemples de réalisation, en référence aux dessins annexés dans lesquels :

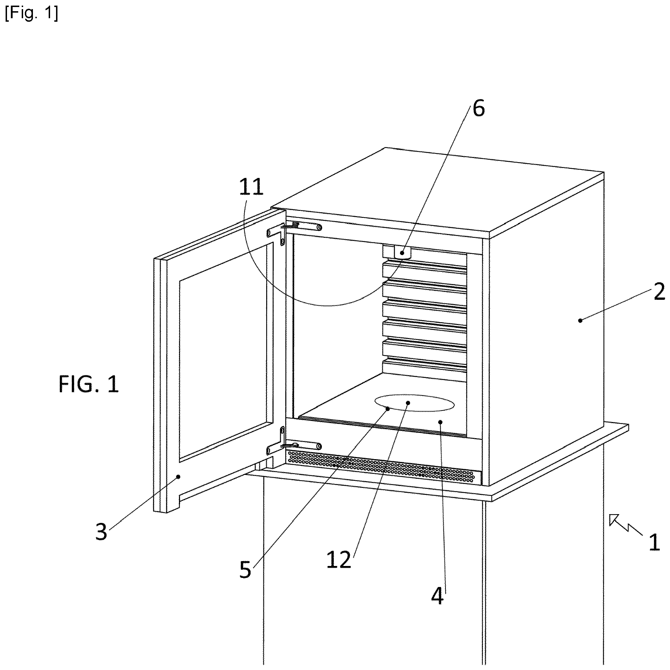

[Fig. 1] représente une vue en perspective d'un dispositif de présentation d'objet conforme à l'invention ;

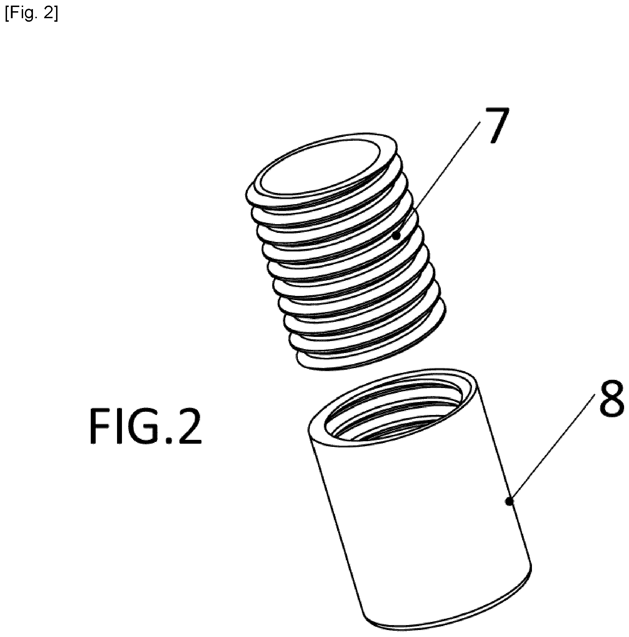

[Fig. 2] représente une vue partielle en perspective d'un organe d'émission d'un faisceau lumineux et d'un guide de lumière à position réglable sur ledit organe d'émission ;

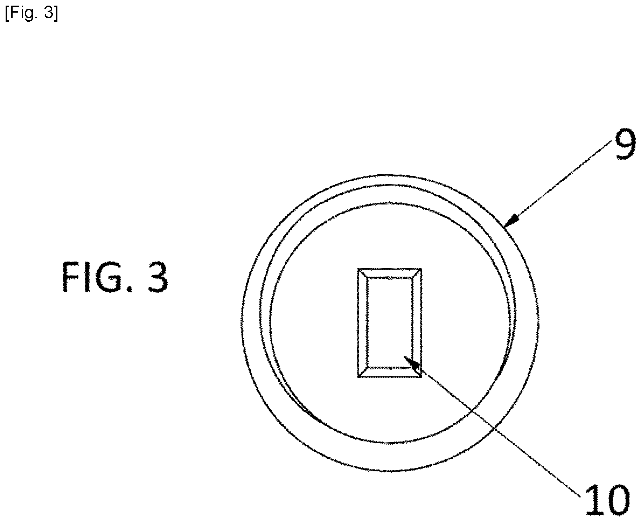

[Fig. 3] représente un exemple de réalisation d'une paroi transversale de fermeture du guide de lumière comportant une ouverture centrale rectangulaire.

Le dispositif 1 de présentation d'objet comprend une enceinte 2 reposant généralement sur un support, non représenté, de préférence en forme de colonne. Dans l'exemple de réalisation représenté, l'enceinte 2 est une enceinte polyédrique en forme de parallélépipède rectangle, mais elle peut être d'une toute autre forme polyédrique. L'enceinte 2 présente au moins une paroi 3 latérale transparente laissant voir l'intérieur de l'enceinte 2. Dans l'exemple représenté, l'enceinte 2 définit un volume intérieur fermé par une porte latérale vitrée qui forme la paroi latérale transparente de l'enceinte 2 laissant voir l'intérieur de l'enceinte 2. En pratique, l'enceinte 2 comprend une face formant fond, une face du dessus opposée à la face formant fond et des faces latérales. Le volume intérieur de l'enceinte 2 est donc limité par un fond, et des faces latérales et du dessus. Dans l'exemple représenté, la paroi 3 latérale transparente de l'enceinte 2 est formée par l'une des faces latérales de l'enceinte 2. L'enceinte 2 aurait pu comporter plusieurs parois latérales transparentes formées par des faces latérales de l'enceinte 2 sans sortir du cadre de l'invention. L'enceinte 2 est une enceinte réfrigérée équipée d'un dispositif de refroidissement de manière en soi connue.

Le fond constitue une surface d'exposition 4 de l'objet à présenter, par exemple un produit alimentaire, tel qu'un article de pâtisserie. La surface d'exposition 4 a un revêtement noir anti-reflet. La surface d'exposition 4 est en effet recouverte d'une couche de peinture noire mate, sur laquelle sont déposées des fibres noires, par exemple en polyamide, ou en une autre matière de préférence de synthèse propice à l'absorption de la lumière. Les fibres qui présentent une longueur inférieure à 1,5 mm ont de préférence une longueur de l'ordre du millimètre, et forment avec la peinture noire mate un revêtement noir, mat et anti-reflet. Pour permettre le maintien des fibres noires sur la peinture noire mate, les fibres noires sont collées à la peinture noire mate. En pratique, la peinture noire adhésive est appliquée à l'intérieur de l'enceinte sur la surface intérieure de l'enceinte à revêtir à savoir au moins la surface d'exposition 4 de l'enceinte 2 et les fibres noires sont projetées sur ladite peinture noire adhésive. Une fois que l'adhésif de la peinture noire a séché, les fibres sont inséparables de la peinture noire et confèrent au revêtement noir anti-reflet ainsi constitué une finition floquée. La présence de fibres permet de réduire la réflectivité de la peinture et favoriser l'absorption de la lumière. Dans l'exemple représenté, la peinture noire mate est une peinture noire adhésive à base de styrène-acrylique d'aspect mat velouté de la société GUITTET commercialisée sous l'appellation Montyl, apte à absorber plus de 99 % de la lumière projetée. Les fibres sont des fibres de polyamide. Les faces latérales autres que celle formant la paroi latérale transparente de l'enceinte 2 et la face du dessus du volume intérieur de l'enceinte 2 sont de préférence revêtues également d'un revêtement noir anti-reflet. Ce revêtement noir anti-reflet est de préférence le même sur l'ensemble des surfaces revêtues. Ce revêtement noir anti-reflet de la surface d'exposition 4 et éventuellement de certaines des autres faces de l'enceinte 2 est un revêtement lavable à l'eau. Ce revêtement noir anti-reflet de la surface d'exposition 4 et éventuellement de certaines des autres faces de l'enceinte est un revêtement compatible avec un contact alimentaire. La surface d'exposition 4 présente une région centrale. L'objet 12 à présenter, tel que l'article de pâtisserie faisant l'objet de la présentation dans l'enceinte, est placé dans la région centrale 5 de la surface d'exposition 4.

Sous la face du dessus du volume intérieur de l'enceinte 2, est disposé un organe 6 d'émission d'un faisceau lumineux, par exemple un mini-spot. Cet organe 6 d'émission d'un faisceau lumineux est disposé en regard de la surface d'exposition 4 de l'objet à présenter, avec une orientation du faisceau lumineux en direction de la région centrale 5 de la surface d'exposition 4. L'organe 6 d'émission d'un faisceau lumineux comprend au moins un élément 11 d'éclairage, tel qu'une diode électroluminescente, disposé à l'intérieur d'un manchon 7 cylindrique portant un filetage sur sa surface extérieure. Le manchon 7 fileté est en position fixe par rapport à le ou les éléments 11 d'éclairage de l'organe 6 d'émission d'un faisceau lumineux.

Un guide 8 de lumière, cylindrique, portant un taraudage intérieur, est monté à l'extérieur du manchon 7 fileté, sur lequel il est déplaçable par vissage, ou dévissage. Ainsi, l'organe 6 d'émission d'un faisceau lumineux est couplable au guide 8 de lumière, par l'intermédiaire du manchon 7 dudit organe 6 d'émission d'un faisceau lumineux. A l'état couplé à l'organe 6 d'émission d'un faisceau lumineux, le guide 8 de lumière est réglable en écartement par rapport à la surface d'exposition 4 de l'objet 12 à présenter. Le guide 8 de lumière porte à son extrémité opposée à son extrémité de raccordement à l'organe 6 d'émission d'un faisceau lumineux une paroi 9 transversale, présentant une ouverture centrale 10. Dans l'exemple représenté, cette paroi 9 transversale est amovible. En variante, le dispositif 1 de présentation d'objet peut comprendre une pluralité de guides 8 de lumière présentant chacun une ouverture centrale 10 non identique en forme et/ou en dimension avec l'ouverture centrale d'au moins l'un des autres guides de lumière. L'ouverture centrale 10 a une forme correspondant, en particulier une forme homothétique à la forme extérieure de l'objet 12 à présenter sur la région centrale 5 de la surface d'exposition 4. Lorsque l'objet présenté est une tartelette ronde, la paroi 9 transversale appliquée sur le guide 8 de lumière est celle qui a une ouverture centrale 10 circulaire. Les parois 9 transversales les plus fréquemment utilisées ont une ouverture centrale ronde, carrée, rectangulaire, oblongue et en forme de coeur.

La fonction du dispositif 1 de présentation d'objet est d'assurer à l'objet à présenter un éclairement correspondant à sa forme extérieure, et appliqué aussi précisément que possible au contour extérieur de l'objet. A cet effet, l'objet à présenter est placé dans la région centrale 5 de la surface d'exposition 4. Le guide 8 de lumière, portant la paroi 9 transversale dont l'ouverture centrale 10 a la forme correspondant à celle de l'objet à présenter, est déplacé, par vissage ou dévissage, sur le manchon 7 fileté de l'organe 6 d'émission d'un signal lumineux, pour amener le contour du faisceau lumineux aussi près que possible du contour de l'objet à présenter. Le déplacement du guide 8 de lumière par rapport à l'organe 6 d'émission d'un signal lumineux et en particulier par rapport au manchon 7 fileté dudit organe 6 d'émission d'un signal lumineux, assure le réglage en écartement du guide 8 de lumière par rapport à la surface d'exposition 4, et l'ajustement de l'éclairement aux dimensions extérieures de l'objet à présenter. L'excédent éventuel d'éclairement autour de l'objet à présenter est absorbé au moins par le revêtement noir et anti-reflet de la surface d'exposition 4.

Ainsi, l'objet à présenter, par exemple un article de pâtisserie, est éclairé seul par le faisceau lumineux issu de l'organe 6 d'émission d'un faisceau lumineux, devant le revêtement noir absorbant de la surface d'exposition 4. Le contraste est très fort et met en extrême valeur l'article de pâtisserie présenté. Le contraste de luminosité entre l'objet à présenter et le revêtement noir de la surface d'exposition 4, a également pour effet d'atténuer sensiblement, pour l'observateur, la perception des autre éléments constituant l'enceinte 2, tels que les parois ou arêtes latérales.

Le dispositif de présentation d'objet a été décrit en relation avec un article de pâtisserie, mais il est adapté à tout produit de consommation, tel que produit de confiserie, crustacé, poisson ou pièce de viande. Comme mentionné ci-dessus, l'enceinte 2 est réfrigérée, et le revêtement de la surface d'exposition 4, ainsi que les faces intérieures de l'enceinte 2, sont lavables pour faciliter la réception d'un objet à présenter formé par un produit alimentaire. Bien que dans l'exemple représenté, l'enceinte 2, par nature ouvrable, comporte une paroi 3 latérale transparente à fonction d'ouvrant et formant la porte 3 de ladite enceinte, cette porte aurait pu être réalisée par une face latérale non transparente de l'enceinte 2.

## Revendications

1. Dispositif (1) de présentation d'objet, comprenant une enceinte (2) réfrigérée ouvrable, délimitant intérieurement une surface d'exposition (4) de l'objet à présenter, et au moins un organe (6) d'émission d'un faisceau lumineux, disposé en regard de la surface d'exposition (4) de l'objet à présenter, pour une orientation du faisceau lumineux en direction de l'objet à présenter, ladite enceinte (2) réfrigérée présentant au moins une paroi (3) latérale transparente, la surface d'exposition (4) ayant un revêtement noir anti-reflet qui comprend une peinture noire mate et des fibres noires, le dispositif (1) de présentation d'objet comprenant
au moins un guide (8) de lumière, l'organe (6) d'émission d'un faisceau lumineux étant
couplable audit au moins un guide (8) de lumière, et, à l'état couplé à l'organe (6) d'émission d'un faisceau lumineux, le guide (8) de lumière est réglable en écartement par rapport à la surface d'exposition (4) de l'objet à présenter.

2. Dispositif (1) de présentation d'objet selon la revendication 1, **caractérisé en ce que** les fibres noires sont collées à la peinture noire mate pour conférer audit revêtement noir anti-reflet une finition floquée.

3. Dispositif (1) de présentation d'objet selon l'une des revendications 1 ou 2, **caractérisé en ce que** les fibres noires présentent une longueur inférieure à 1,5 mm.

4. Dispositif (1) de présentation d'objet selon l'une des revendications 1 à 3, **caractérisé en ce que** la peinture noire mate est une peinture acrylique et **en ce que** les fibres noires sont en matière de synthèse de préférence en polyamide.

5. Dispositif (1) de présentation d'objet selon l'une des revendications 1 à 4, **caractérisé en ce que** le revêtement noir anti-reflet de la surface d'exposition (4) de l'objet à présenter est un revêtement lavable à l'eau.

6. Dispositif (1) de présentation d'objet selon l'une des revendications 1 à 5, **caractérisé en ce que** l'enceinte (2) est une enceinte polyédrique, de préférence parallélépipédique, comprenant une face formant fond, une face du dessus opposée à la face formant fond et des faces latérales, **en ce que** surface d'exposition (4) de l'objet à présenter de l'enceinte (2) est formée par la face formant fond de l'enceinte (2), **en ce que** la ou au moins l'une des parois (3) latérales transparentes de l'enceinte (2) est formée par l'une des faces latérales de l'enceinte (2) et **en ce qu'**au moins chaque face latérale qui ne forme pas une paroi latérale transparente de l'enceinte (2) et la face du dessus de l'enceinte (2) ont, comme la surface d'exposition (4) de l'objet à présenter, un revêtement noir anti-reflet.

7. Dispositif de présentation d'objet selon l'une des revendications 1 à 6, **caractérisé en ce que** le guide (8) de lumière a la forme d'un cylindre portant un taraudage intérieur pour un vissage assurant d'une part son couplage à l'organe (6) d'émission d'un faisceau lumineux, et d'autre part son réglage en écartement par rapport à la surface d'exposition (4) de l'objet à présenter.

8. Dispositif de présentation d'objet selon l'une des revendications 1 à 7, **caractérisé en ce que** le guide (8) de lumière qui a la forme d'un cylindre raccordable par l'une de ses extrémités à l'organe (6) d'émission d'un faisceau lumineux porte à son extrémité opposée une paroi transversale (9) de préférence amovible présentant une ouverture centrale (10).

9. Ensemble comprenant un dispositif (1) de présentation d'objet et un objet à présenter de forme et de dimensions connues **caractérisé en ce que** le dispositif (1) de présentation d'objet est conforme à l'une des revendications 1 à 8, **en ce que** le guide (8) de lumière qui a la forme d'un cylindre raccordable par l'une de ses extrémités à l'organe (6) d'émission d'un faisceau lumineux porte à son extrémité opposée une paroi transversale (9) de préférence amovible présentant une ouverture centrale (10) et **en ce que** l'ouverture centrale (10) de la paroi transversale (9) est de forme homothétique à la forme de l'objet à présenter.

## Patentansprüche

1. Vorrichtung (1) zum Präsentieren eines Gegenstands, umfassend einen zu öffnenden gekühlten Innenraum (2), der im Inneren eine Ausstellungsfläche (4) des zu präsentierenden Gegenstands begrenzt, der mindestens ein Organ (6) zur Ausgabe eines Lichtstrahls, das gegenüber der Ausstellungsfläche (4) des zu präsentierenden Gegenstands angeordnet ist, für eine Ausrichtung des Lichtstrahls in Richtung des zu präsentierenden Objekts aufweist, wobei der gekühlte Innenraum (2) mindestens eine transparente seitliche Wand (3) aufweist, wobei die Ausstellungsfläche (4) eine schwarze reflexionsfreie Verkleidung aufweist, die eine matte schwarze Farbe und schwarze Fasern umfasst, wobei die Vorrichtung (1) zum Präsentieren eines Gegenstands mindestens eine Lichtführung (8) umfasst, wobei das Organ (6) zur Ausgabe eines Lichtstrahls mit der mindestens einen Lichtführung (8) gekoppelt werden kann und im Zustand der Kopplung an das Organ (6) zur Ausgabe eines Lichtstrahls die Lichtführung (8) im Abstand mit Bezug auf die Ausstellungsfläche (4) des zu präsentierenden Gegenstands eingestellt werden kann.

2. Vorrichtung (1) zum Präsentieren eines Gegenstands nach Anspruch 1, **dadurch gekennzeichnet, dass** die schwarzen Fasern an die matte schwarze Farbe geklebt sind, um der reflexionsfreien schwarzen Verkleidung eine beflockte Endbearbeitung zu verleihen.

3. Vorrichtung (1) zum Präsentieren eines Gegenstands nach Anspruch 1 oder 2, **dadurch gekennzeichnet, dass** die schwarzen Fasern eine Länge von weniger als 1,5 mm aufweisen.

4. Vorrichtung (1) zum Präsentieren eines Gegenstands nach einem der Ansprüche 1 bis 3, **dadurch gekennzeichnet, dass** die matte schwarze Farbe eine Acrylfarbe ist und dadurch, dass die schwarzen Fasern aus einem Synthesematerial sind, vorzugsweise aus Polyamid.

5. Vorrichtung (1) zum Präsentieren eines Gegenstands nach einem der Ansprüche 1 bis 4, **dadurch gekennzeichnet, dass** die schwarze reflexionsfreie Verkleidung der Ausstellungsfläche (4) des zu präsentierenden Gegenstands eine mit Wasser waschbare Verkleidung ist.

6. Vorrichtung (1) zum Präsentieren eines Gegenstands nach einem der Ansprüche 1 bis 5, **dadurch gekennzeichnet, dass** der Innenraum (2) ein polyedrischer Innenraum ist, vorzugsweise parallelepiped, umfassend eine Fläche, die den Boden bildet, eine Fläche darüber, gegenüber der Fläche, die den Boden bildet, und seitliche Flächen, dadurch, dass die Ausstellungsfläche (4) des zu präsentierenden Gegenstands des Innenraums (2) durch die Fläche gebildet ist, die den Boden des Innenraums (2) bildet, dadurch, dass mindestens eine der transparenten seitlichen Wände (3) des Innenraums (2) von einer der seitlichen Flächen des Innenraums (2) gebildet ist, und dadurch, dass mindestens jede seitliche Fläche, die keine transparente seitliche Wand des Innenraums (2) bildet, und die darüber liegende Fläche des Innenraums (2) als Ausstellungsfläche (4) des zu präsentierenden Gegenstands die schwarze reflexionsfreie Verkleidung aufweisen.

7. Vorrichtung zum Präsentieren eines Gegenstands nach einem der Ansprüche 1 bis 6, **dadurch gekennzeichnet, dass** die Lichtführung (8) die Form eines Zylinders aufweist, der ein Innengewinde für eine Verschraubung trägt, die einerseits seine Kopplung an das Organ (6) zur Ausgabe eines Lichtstrahls und andererseits seine Einstellung im Abstand mit Bezug auf die Ausstellungsfläche (4) des zu präsentierenden Objekts sicherstellt.

8. Vorrichtung zum Präsentieren eines Gegenstands nach einem der Ansprüche 1 bis 7, **dadurch gekennzeichnet, dass** die Lichtführung (8), die die Form eines Zylinders aufweist, der mit einem seiner Enden mit dem Organ (6) zur Ausgabe eines Lichtstrahls verbunden werden kann, an ihrem Ende gegenüber einer vorzugsweise abnehmbaren Querwand (9) eine zentrale Öffnung (10) trägt.

9. Einheit, umfassend eine Vorrichtung (1) zum Präsentieren eines Gegenstands und einen zu präsentierenden Gegenstand mit bekannter Form und bekannten Abmessungen, **dadurch gekennzeichnet, dass** die Vorrichtung (1) zum Präsentieren einem der Ansprüche 1 bis 8 entspricht, dadurch, dass die Lichtführung (8), die die Form eines Zylinders aufweist, der mit einem seiner Enden mit dem Organ (6) zur Ausgabe eines Lichtstrahls verbunden werden kann, an ihrem Ende gegenüber einer vorzugsweise abnehmbaren Querwand (9) eine zentrale Öffnung (10) trägt, und dadurch dass die zentrale Öffnung (10) der Querwand (9) eine homothetische Form zur Form des zu präsentierenden Gegenstands aufweist.

## Claims

1. A device (1) for presenting an object, comprising an openable refrigerated enclosure (2), inwardly delimiting a display surface (4) for the object to be presented, and at least one member (6) for emitting a light beam, arranged facing the display surface (4) for the object to be presented, for orienting the light beam toward the object to be presented, said refrigerated enclosure (2) having at least one transparent side wall (3), the display surface (4) having a black anti-reflection coating that comprises a matte black paint and black fibers, the object display device (1) comprising at least one light guide (8), the member (6) for emitting a light beam being able to be coupled to said at least one light guide (8), and, in the state coupled to the member (6) for emitting a light beam, the light guide (8) is adjustable in distance from the display surface (4) for the object to be presented.

2. The device (1) for displaying an object according to claim 1, **characterized in that** the black fibers are bonded to the matte black paint to give said black anti-reflective coating a flocked finish.

3. The device (1) for presenting an object according to one of claims 1 or 2, **characterized in that** the black fibers have a length of less than 1.5 mm.

4. The device (1) for presenting an object according to one of claims 1 to 3, **characterized in that** the matte black paint is an acrylic paint and **in that** the black fibers are made of synthetic material, preferably polyamide.

5. The device (1) for presenting an object according to one of claims 1 to 4, **characterized in that** the black anti-reflective coating of the display surface (4) for the object to be presented is a coating that can be washed with water.

6. The device (1) for presenting an object according to one of claims 1 to 5, **characterized in that** the enclosure (2) is a polyhedral enclosure, preferably parallelepipedal, comprising a face forming the bottom, a top face opposite the face forming the bottom and side faces, **in that** the display surface (4) for the object to be presented of the enclosure (2) is formed by the face forming the bottom of the enclosure (2), **in that** the or at least one of the transparent side walls (3) of the enclosure (2) is formed by one of the side faces of the enclosure (2) and **in that** at least each side face which does not form not a transparent side wall of the enclosure (2) and the top face of the enclosure (2) have, like the display surface (4) of the object to be presented, a black anti-reflective coating.

7. The device for presenting an object according to one of claims 1 to 6, **characterized in that** the light guide (8) has the shape of a cylinder carrying an internal thread for screwing ensuring, on the one hand, coupling thereof to the member (6) for emitting a light beam, and on the other hand, its adjustment in spacing with respect to the display surface (4) for the object to be presented.

8. The device for presenting an object according to one of claims 1 to 7, **characterized in that** the light guide (8), which has the shape of a cylinder connectable by one of its ends to the member (6) for emitting a light beam, bears at its opposite end a transverse wall (9), preferably removable, having a central opening (10).

9. An assembly comprising a device (1) for presenting an object and an object to be presented of known shape and dimensions, **characterized in that** the device (1) for presenting an object is according to one of claims 1 to 8, **in that** the light guide (8), which has the shape of a cylinder connectable by one of its ends to the member (6) for emitting a light beam, bears at its opposite end a transverse wall (9), preferably removable, having a central opening (10), and **in that** the central opening (10) of the transverse wall (9) is of a shape homothetic to the shape of the object to be presented.
